# EUROPÄISCHE PATENTSCHRIFT

(11) **EP 3 873 817 B1**
(45) Veröffentlichungstag und Bekanntmachung des Hinweises auf die Patenterteilung: **17.04.2024**
(21) Anmeldenummer: 19791197.7
(22) Anmeldetag: 17.10.2019
(51) Int. Cl.: B65D 1/48

(54) **KUNSTSTOFFBEHÄLTER**
PLASTIC CONTAINER
RÉCIPIENT EN PLASTIQUE

(30) Priorität: 30.10.2018 CH 13242018
(43) Veröffentlichungstag der Anmeldung: 08.09.2021
(73) Patentinhaber: ALPLA Werke Alwin Lehner GmbH & Co. KG, 6971 Hard (AT)
(72) Erfinder: UNTERLECHNER, Oliver, 6900 Bregenz (AT); MÜLLER, Florian, 6971 Hard (AT)
(74) Vertreter: Bohest AG Branch Ostschweiz
(86) Internationale Anmeldenummer: PCT/EP2019/078223
(87) Internationale Veröffentlichungsnummer: WO 2020/088944

(56) Entgegenhaltungen:
- EP-A2- 1 616 801
- WO-A1-03/013982
- CN-A- 108 484 110
- CN-B- 103 043 272
- US-A1- 2014 008 254
- US-A1- 2016 272 370
- US-B1- 6 179 142

## Beschreibung

Die Erfindung betrifft einen Kunststoffbehälter für fliess- und rieselfähiges Füllgut gemäss dem Oberbegriff des Patentanspruchs 1.

Die in der Vergangenheit üblichen Behälter aus Weiss- oder Buntblech, aus Glas oder auch aus Keramik werden in zunehmendem Mass von Behältern aus Kunststoff abgelöst. Insbesondere für die Verpackung fluider Substanzen, beispielsweise für Anwendungen im Haushalt, in Landwirtschaft, Industrie und Gewerbe etc., kommen neuerdings hauptsächlich Kunststoffbehälter zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältern bei den Anwendern zu fördern.

Kunststoffbehälter aus Polyethylen (PE oder auch HDPE oder LDPE) oder aus Polypropylen und ähnlichen Materialen werden meist in einem Extrusionsblasverfahren hergestellt. Hierbei wird aus dem Kunststoffmaterial ein Schlauch geformt, welcher in einem Formwerkzeug aufgeblasen wird und sich in der Folge an die Konturen des Formwerkzeuges anlegt. Extrusionsgeblasene Kunststoffbehälter sind daran erkennbar, dass sie zumindest am Boden eine Naht aufweisen die vom Quetschen eines offenen Endes des Vorformlings herrührt. Die abgequetschten Enden, sogenannte Butzen, müssen nach dem Entformen vom Blasformteil entfernt werden.

Kunststoffbehälter aus Polyethylenterephthalat (PET) und ähnlichen Materialien werden meist in einem sogenannten Streckblasverfahren hergestellt. Dabei wird zunächst in einem Spritzgiessverfahren in einer Spritzgiessform ein Preform hergestellt. Neuerdings sind auch Fliesspressverfahren oder auch Extrusionsblasen zur Herstellung von Preforms vorgeschlagen worden. Der Preform weist einen im wesentlichen länglichen Preformkörper auf und ist an seinem einen Längsende geschlossen ausgebildet. Dort befindet sich üblicherweise auch ein vom Spritzgiessen herrührender Anspritzpunkt. Dieser ist auch später an den fertigen Kunststoffbehältern erkennbar. An das andere Ende des Preformkörpers schliesst ein Halsabschnitt an, der mit einer Ausgiessöffnung versehen ist. Der Halsabschnitt weist bereits die spätere Form des Behälterhalses auf. Im Falle einer Flasche schliesst nach der finalen Formgebung an den Behälterhals ein Schulterabschnitt an. Bei vielen der bekannten Preforms sind der Preformkörper und der Halsabschnitt durch einen sogenannten Supportring voneinander getrennt. Der Supportring ragt radial von der Halswandung ab und dient für den Transport des Preforms bzw. des daraus hergestellten Kunststoffbehälters und für eine Abstützung des Preforms am Blasformwerkzeug bzw. des Kunststoffbehälters beim Verschliessen desselben.

Der Preform wird nach seiner Herstellung entformt und kann in einem einstufigen Streckblasverfahren noch heiss sofort weiterverarbeitet werden. Bei einem Zweistufen-Streckblasverfahren wird der Preform für eine räumlich und/oder zeitlich getrennte Weiterverarbeitung auf einer Streckblasvorrichtung abgekühlt und zwischengelagert. Vor der Weiterverarbeitung in der Streckblasvorrichtung wird der Preform dann bei Bedarf konditioniert, d.h. dem Preform wird ein Temperaturprofil aufgeprägt. Danach wird er in eine Blasform einer Streckblasvorrichtung eingebracht. In der Blasform wird der Preform schliesslich durch ein mit Überdruck eingeblasenes Gas, üblicherweise Luft, gemäss der Formkavität aufgeblasen und dabei zusätzlich mit einem Reckdorn axial verstreckt.

Es ist auch bereits ein Spritzblasverfahren bekannt, bei dem der Streckblasprozess direkt anschliessend an das Spritzen des Preforms erfolgt. Der Preform verbleibt dabei auf dem Spritzkern, der zugleich eine Art Reckdorn bildet. Der Preform wird wiederum durch Überdruck gemäss der Formkavität einer Blasform, die auf den Spritzkern zugestellt wird oder umgekehrt, aufgeblasen und dabei vom Reckdorn verstreckt. Danach wird der fertige Kunststoffbehälter entformt. Streckgeblasene bzw. spritzgeblasene Kunststoffbehälter sind anhand des üblicherweise im Bereich des Behälterbodens angeordneten, vom Preform herrührenden Anspritzpunktes identifizierbar, in dem das Kunststoffmaterial nur geringfügig bis gar nicht verstreckt worden ist.

Es sind unterschiedlichste 3D-Druckverfahren zur Herstellung von Objekten aus Kunststoff, Keramik oder Metall bekannt (siehe bspw. CN 103 043 272 B, US 2014/008254 A1 oder US 2016/272370 A1). Mittlerweile sind auch Carbon- und Graphitmaterialien und Materialgemische sowie Papier und sonstige pflanzenfaserbasierte Werkstoffe im 3D-Druck verarbeitbar. Kennzeichend für diese 3D-Druckverfahren ist, dass Material Schicht für Schicht aufgetragen und zu einem dreidimensionalen Objekt geformt wird.

Diese Verfahren werden daher auch als additive Fertigungsverfahren bezeichnet. Der schichtweise Aufbau erfolgt computergesteuert aus einem oder mehreren flüssigen oder festen Werkstoffen nach vorgegebenen Massen und Formen, wobei feste Werkstoffe beispielsweise in Form von Pulver oder Drähten in den Prozess eingebracht werden. Beim Schichtaufbau finden physikalische und/oder chemische Schmelz- und Härtungsprozesse statt. Für die Zwecke dieser Anmeldung sollen unter 3D-Druckverfahren alle additiven Fertigungsverfahren verstanden werden wie insbesondere das selektive Laserschmelzen, das Elektronenstrahlschmelzen, das selektive Lasersintern, die Stereolithografie, das Digital Light Processing und das Polyjet-Modeling sowie das Fused Deposition Modeling.

Aus ökonomischen und ökologischen Gründen wird danach getrachtet, bei der Herstellung von Kunststoffbehältern möglichst wenig Kunststoffmaterial einzusetzen. Dies wird derart umgesetzt, dass die Wandstärken der Kunststoffbehälter verringert werden. Aus Gründen der geforderten Eigensteifigkeit, der mechanischen Stabilität, beispielsweise zur Erfüllung von Falltests und weiteren mechanischen Beanspruchungen, und der Innendruckbeständigkeit der Kunststoffbehälter, beispielsweise für die Aufbewahrung von Kohlendioxidhaltigen Getränken, sind der Reduktion der Wandstärken der Kunststoffbehälter Grenzen gesetzt.

Aufgabe der vorliegenden Erfindung ist es daher, einen Kunststoffbehälter zu schaffen, der es erlaubt, die eingesetzte Menge an Kunststoffmaterial noch weiter zu verringern. Dabei soll der Kunststoffbehälter für eine massentechnische Fertigung geeignet sein.

Die Lösung dieser und noch weiterer Aufgaben besteht in einem Kunststoffbehälter für fliess- und rieselfähiges Füllgut, welcher die im Patentanspruch 1 angeführten Merkmale aufweist. Weiterbildungen und/oder vorteilhafte Ausführungsvarianten der Erfindung sind Gegenstand der abhängigen Patentansprüche.

Durch die Erfindung wird ein Kunststoffbehälter insbesondere für fliess- und rieselfähiges Füllgut geschaffen, der einen mit einer Entleeröffnung oder mehreren Entleeröffnungen versehenen Behälterkörper aufweist, der Behälterwandungen und einen Behälterboden besitzt, die einen Hohlraum umschliessen. Der Kunststoffbehälter ist im Wesentlichen als Flasche ausgebildet. Die Entleeröffnung ist aus einem Schulterbereich, einem daran anschliessenden Halsbereich sowie einer daran anschliessenden Ausgiessöffnung gebildet.

Der Behälterkörper weist wenigstens eine Stützstruktur auf. Die Stützstruktur und/oder der Behälterkörper sind wenigstens bereichsweise in einem 3D-Druckverfahren hergestellt. Erfindungsgemäß ist die Entleeröffnung, mit anderen Worten die strukturellen Elemente Schulterbereich, Halsbereich und Ausgiessöffnung, gemeinsam mit dem Behälterkörper und/oder der Stützstruktur in einem 3D-Druckverfahren hergestellt.

Indem der Behälterkörper wenigstens eine Stützstruktur aufweist, kann eine zum Anmeldezeitpunkt bekannte Mindestwandstärke des Behälterkörpers noch weiter verringert werden. Die Stützstruktur unterstützt die Eigensteifigkeit des Behälterkörpers. Durch die Stützstruktur werden die Lager- bzw. Barrierefunktion des Behälterkörpers und die Stützfunktion voneinander entkoppelt. Die Barrierefunktion wird nach wie vor von den den Hohlraum umschliessenden Behälterwandungen und vom Behälterboden wahrgenommen. Die Stützfunktion hingegen wird von der Stützstruktur übernommen. Dies erlaubt es, die Behälterwandungen und/oder den Behälterboden in ihren Mindestwandstärken zu verringern. Die Mindestwandstärke ist nur noch durch die Barrierefunktion des Werkstoffs und der Anwendung begrenzt. Dadurch kann Kunststoffmaterial eingespart werden, was aus ökologischer und aus ökonomischer Sicht von Vorteil ist, ohne die Funktionalität und die mechanische Belastbarkeit des Kunststoffbehälters zu beeinträchtigen.

Die Stützstruktur und/oder der Behälterkörper können wenigstens bereichsweise in einem 3D-Druckverfahren hergestellt sein. Das 3D-Druckverfahren erlaubt die Herstellung von 3-dimensionalen Gegenständen unmittelbar aus den die räumlichen Koordinaten des Gegenstands wiedergebenden elektronischen Daten. Auf die Herstellung einer speziellen Form mit Formkavität, wie sie beispielsweise für ein Spritzgiessverfahren erforderlich ist, kann dabei verzichtet werden. Das 3D-Druckverfahren erlaubt dabei auch mehr Freiheitsgrade als beispielsweise beim Spritzgiessen eines Gegenstand möglich sind, bei dem ja immer die Entformbarkeit des hergestellten Gegenstands berücksichtigt werden muss.

Ein 3D-Druckverfahren zeichnet sich insbesondere dadurch aus, dass durch dieses Verfahren hergestellte Behälter, bzeiehungsweise durch dieses Verfahren hergestellte Bereiche von Behältern keine sichtbaren Nähte oder Anspritzpunkte aufweisen.

Die Stützstruktur kann an wenigstens einer Aussenwandung des Behälterkörpers und/oder an wenigstens einer Innenwandung des Behälterkörpers und/oder am Behälterboden und/oder innerhalb des von den Behälterwandungen umschlossenen Hohlraums angeordnet sein. In einer alternativen Ausführungsvariante der Erfindung kann die Stützstruktur in wenigstens eine der Behälterwandungen und/oder in den Behälterboden eingebettet sein. Bei weiteren Ausführungsvarianten der Erfindung können auch Anordnungen von Stützstrukturen und Einbettungen von Stützstrukturen miteinander kombiniert sein. Bei allen Ausführungsvarianten erfüllen die Behälterwandungen und der Behälterboden in erster Linie Barrierefunktionen, während die Tragfunktion durch die Stützstrukturen gewährleistet ist. Die erfindungsgemässe Ausbildung des Behälterkörpers mit Stützstrukturen erlaubt auch noch Zusatzfunktionen, die im Folgenden noch erläutert werden.

Die Stützstruktur kann aus Kunststoff und/oder aus Metall und/oder aus Keramik und/oder aus Carbon-bzw. Graphitstrukturen und dergleichen Materialien oder Materialgemischen oder aus Papier oder sonstigen pflanzenfaserbasierten Werkstoffen bestehen. Einschränkungen bestehen nur dort, wo die Stützstruktur direkt mit dem Füllgut in Berührung kommt. In diesen Fällen muss das Material der Stützstruktur beispielsweise für Lebensmittel geeignet und zugelassen und/oder bezüglich des Füllguts inert sein.

Bei einer Ausführungsvariante der Erfindung ist die Stützstruktur innerhalb des von den Behälterwandungen umschlossenen Hohlraums angeordnet. Dabei erstreckt sich die Stützstruktur im Wesentlichen über eine gesamte axiale Länge des Behälterkörpers. Die Behälterwandungen bilden bei dieser Ausführungsvariante nach aussen hin nur eine Umhüllung der Stützstruktur. Die Wandstärke dieser Umhüllung ist ausreichend gross, um die Barriereanforderungen zu erfüllen. Die eigentliche Tragfunktion und die mechanische Stabilität des Behälterkörpers werden von der Stützstruktur erfüllt.

Die Stützstruktur kann beispielsweise aus einem oder mehreren Grundstrukturelementen zusammengesetzt sein, die im wesentlichen gleichartig ausgebildet und miteinander verbunden sind. Bei der Herstellung der Stützstruktur in einem 3D-Druckverfahren bestehen hinsichtlich der Ausgestaltung und Formgebung der Grundstrukturelemente kaum Einschränkungen. Die Grundstrukturelemente können dann beispielsweise durch Schweissen, z.B. Laserschweissen, miteinander verbunden sein. Ebenso ist es möglich unterschiedliche Grundstrukturelemente direkt während ihrer Herstellung miteinander zu verbinden bzw. diese gemeinsam in einem einzigen Herstellverfahren zu fertigen.

Bei einer Ausführungsvariante der Erfindung weisen die Grundstrukturelemente einen Durchmesser von wenigstens 0,05 mm bis 1 mm auf. Trotz des geringen Durchmessers der Grundstrukturelemente weist die daraus zusammengefügte Stützstruktur eine ausreichend grosse Festigkeit auf.

Eine Ausführungsvariante der Erfindung kann vorsehen, dass die Stützstruktur sich über einen Grossteil des von den Begrenzungswandungen umschlossenen Hohlraums erstreckt. Zwar geht durch die Stützstruktur ein Teil des Hohlraums verloren. Dafür weist der derart ausgebildete Kunststoffbehälter eine besonders hohe mechanische Festigkeit auf.

Indem die Stützstruktur in einer weiteren Ausführungsvariante des Kunststoffbehälters, beispielsweise einer Kunststoffflaschen, einen fachwerkartigen Aufbau aufweist, kann das durch die Stützstruktur verlorene Volumen klein gehalten werden. Fachwerkartig aufgebaute Stützstrukturen weisen zudem eine hohe Eigensteifigkeit und eine hohe Stauchfestigkeit auf.

Bei einer weiteren Variante des Kunststoffbehälters kann die Stützstruktur dreidimensional aufgebaut und in eine oder mehrere Dimensionen elastisch deformierbar ausgebildet sein. Die elastische Ausbildung der Stützstruktur erlaubt beispielsweise ein Ausbringen des fliess- oder rieselfähigen Füllguts durch Zusammenpressen von zwei entlang der angegebenen Dimension einander gegenüberliegenden Behälterwandungen.

Die angegebene Dimension der Stützstruktur entspricht üblicherweise einer Tiefe des Behälterkörpers. In den beiden anderen Dimensionen ist die Stützstruktur starr ausgebildet, um die Stauchfestigkeit und die Breitenfestigkeit des Kunststoffbehälters zu gewährleisten. Es versteht sich jedoch, dass der Kunststoffbehälter statt in seiner Tiefe auch in seiner Breite flexibel ausgebildet sein kann.

Bei einer weiteren Ausführungsvariante des erfindungsgemässen Kunststoffbehälters ist die Stützstruktur an wenigstens einer der Behälterwandungen angeordnet bzw. in wenigstens eine der Behälterwandungen eingebettet. Bei dieser Ausführungsvariante der Erfindung bildet die Stützstruktur eine Art Gerüst für die jeweilige Behälterwandung. Die Behälterwandung selbst muss nur noch so dick ausgebildet werden, wie es für die Erfüllung der Barrierefunktion erforderlich ist. Die mechanische Festigkeit der Behälterwandung ist durch die Stützstruktur festgelegt.

Bei einer weiteren Ausführungsform der Erfindung ist die Stützstruktur als eine Rahmenstruktur ausgebildet, die sich wenigstens bereichsweise über eine axiale Längsausdehnung und/oder eine Umfangsausdehnung der Behälterwandung erstreckt. Die Behälterwandung kann beispielsweise derart in diese Rahmenstruktur eingefügt sein, dass die Rahmenstruktur sichtbar bleibt. In einer alternativen Ausführungsvariante kann die Rahmenstruktur von der Behälterwandung verdeckt sein.

Die Stützstruktur kann als eine konturgebende Struktur ausgebildet sein und die Kontur der wenigstens einen Behälterwandung festlegen. Die einzelnen Behälterwandungen können dann beispielsweise zu dem Kunststoffbehälter zusammenmontiert werden. In der Regel werden aber die Stützstrukturen der einzelnen Behälterwandungen aneinander befestigt, um die Kontur des Behälterkörpers festzulegen. In einer weiteren Ausführungsvariante der Erfindung wird die Stützstruktur derart im 3D-Druckverfahren hergestellt, dass sie bereits die gesamte Kontur des Behälterkörpers festlegt. Die Behälterwandungen des Behälterkörpers werden dann innen oder aussen an die Stützstruktur angefügt.

Bei einer Ausführungsvariante des Kunststoffbehälters ist die Stützstruktur zwischen einer Aussenwandung und einer Innenwandung des Behälterkörpers angeordnet. Bei dieser Variante ist die Stützstruktur in die Behälterwandungen eingebettet. Derart montiert kommt die Stützstruktur nicht in Kontakt mit dem fliess- oder rieselfähigen Füllgut. Dies erhöht die Freiheitsgrade hinsichtlich der einsetzbaren Materialien.

Die Stützstruktur kann derart ausgebildet sein, dass sie in eine ebene Fläche abwickelbar ist. Die Stützstruktur kann auch aus einem flachen Bandmaterial gefertigt sein. Die Formgebung der Stützstruktur kann dabei durch Stanzen, mechanisches Schneiden, Laserschneiden oder dergleichen Bearbeitungsverfahren erfolgen. Bei einer Herstellung der Stützstruktur in einem 3D-Druckverfahren kann diese in planen Schichten hergestellt sein. Die Schichten können dabei parallel zu einer Längsachse des Kunststoffbehälters ausgerichtet sein.

Eine weitere Ausführungsform des erfindungsgemässen Kunststoffbehälters kann vorsehen, dass die Stützstruktur als eine bistabile Konstruktion ausgebildet ist. Eine erste stabile Lage der Stützstruktur ist der zusammengefaltete Zustand. Im zusammengefalteten Zustand kann die Stützstruktur dann in eine Hülle, welche eine Begrenzungswandung bzw. die Begrenzungswandungen für den Behälterkörper bildet, eingeführt werden. Bei Bedarf, beispielsweise um den Kunststoffbehälter zu befüllen, kann die Stützstruktur dann wieder entfaltet werden. Eine derartige Version des Kunststoffbehälters erweist sich insbesondere für den Transport im leeren Zustand von Vorteil.

Bei einer anderen Ausführungsvariante des Kunststoffbehälters kann die aus Grundstrukturelementen aufgebaute Stützstruktur als eine verschränkte Struktur ausgebildet sein, die beispielsweise durch ein mechanisches Verstellen eines der Grundstrukturelemente in ihre Endform bringbar ist. Auch diese Ausführungsvariante des Kunststoffbehälters ist zusammenfaltbar und bei Bedarf wieder entfaltbar.

Die Grundstrukturelemente, aus denen die faltbare Stützstruktur zusammengesetzt ist, weist einen Durchmesser auf, der 0,05 mm nicht unterschreitet. Trotz dieser geringen Abmessungen können aus den Grundstrukturelementen Stützstrukturen zusammengesetzt werden, die die erforderlichen mechanischen Festigkeiten aufweisen.

Bei einer weiteren Ausführungsvariante der Erfindung ist die Stützstruktur am Behälterboden angeordnet und/oder in den Behälterboden eingebettet. Dadurch sind auch im Behälterboden die Stützfunktion und die Barrierefunktion voneinander getrennt, und es kann auch der Behälterboden mit einer deutlich geringeren Wandstärke ausgebildet werden.

Verschiedene weitere Varianten des erfindungsgemässen Kunststoffbehälters zeichnen sich durch eine Kombination von Stützstrukturen aus, die wenigstens an einer Aussenwandung des Behälterkörpers und/oder an wenigstens einer Innenwandung des Behälterkörpers und/oder am Behälterboden und/oder innerhalb des von den Behälterwandungen umschlossenen Hohlraums angeordnet sind oder in wenigstens eine der Behälterwandungen und/oder in den Behälterboden eingebettet sind. Diese Varianten können faltbar oder kontrolliert kollabierbar ausgebildet sein. Dabei können die Stützstruktur und/oder die Behälterwandungen und/oder der Behälterboden wenigstens bereichsweise in einem 3D-Druckverfahren hergestellt sein.

In einer alternativen Ausführungsvariante der Erfindung kann der Behälterkörper beispielsweise in einem Blasverfahren hergestellt sein. Ein mögliches Herstellungsverfahren stellt dabei das Extrusionsblasen dar, bei dem ein extrudierter Kunststoffschlauch in eine konturgebende Stützstruktur, die zuvor in die Blasform eingebracht wurde, aufgeblasen wird. Die Stützstruktur kann dabei wenigstens bereichsweise in einem 3D-Druckverfahren hergestellt sein.

Eine mit einer Stützstruktur versehenen Behälterwandung weist eine Wandstärke von 0,1 mm bis 0,5 mm, vorzugsweise von 0,15 mm bis 0,3 mm, auf, wobei die Wandstärke ohne die Stützstruktur gemessen ist. In den Bereichen, in denen die Stützstruktur und die Behälterwandungen überlappen, beträgt die Wandstärke wenigstens 0,25 mm.

Ein erfindungsgemässer Kunststoffbehälter mit Stützstrukturen weist einen Behälterkörper auf, der zu mehr als 50% aus thermoplastischen Kunststoffen insbesondere PET, PP, HDPE oder LDPE oder sonstige biobasierte thermoplastische Kunststoffe, wie zum Beispiel PEF besteht. Die einsetzbaren Kunststoffe hängen dabei natürlich auch vom für die Herstellung des Behälterkörpers eingesetzten Verfahren ab.

Der Kunststoffbehälter kann einen Behälterkörper mit kreisförmigem oder einem flachovalen oder einem polygonalen Querschnitt aufweisen. Der Kunststoffbehälter kann auch einen integrierten Griff aufweisen. In einer alternativen Ausführungsvariante kann der Griff natürlich auch erst nachträglich am Behälterkörper montiert sein. Die Stützstruktur kann dazu beispielsweise bereits mit Montagepunkten für den Griff ausgestattet sein.

Weitere Vorteile und Merkmale ergeben sich aus der nachfolgenden Beschreibung von Ausführungsbeispielen der Erfindung unter Bezugnahme auf die schematischen Zeichnungen. Es zeigen in nicht massstabsgetreuer schematischer Darstellung:
- Fig. 1: eine teilweise längsgeschnittene perspektivische Ansicht eines Kunststoffbehälters;
- Fig. 2: eine perspektivische Ansicht eines Grundstrukturelements;
- Fig. 3: eine aus Grundstrukturelementen gemäss Fig. 2 zusammengesetzte Stützstruktur;
- Fig. 4: eine alternative Variante eines Grundstrukturelements;
- Fig. 5: eine aus Grundstrukturelementen gemäss Fig. 4 zusammengesetzte Stützstruktur;
- Fig. 6: eine Stützstruktur einer Variante eines Kunststoffbehälters; und
- Fig. 7: Behälterwandungen und ein Behälterboden für eine Stützstruktur gemäss Fig. 6.

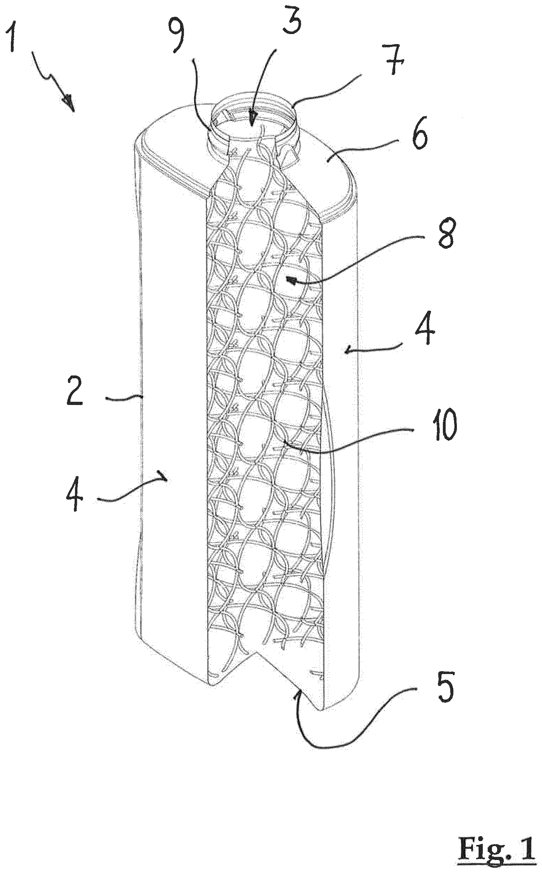

Ein in Fig. 1 in teilweise geschnittener Ansicht dargestellter Kunststoffbehälter trägt gesamthaft das Bezugszeichen 1. Der Kunststoffbehälter 1 weist einen Behälterkörper 2 auf, der mit einer Entleeröffnung versehen ist. Der Behälterkörper 2 besitzt Behälterwandungen 4 und einen Behälterboden 5, die einen Hohlraum 8 umschliessen. Der Behälterkörper 2 besteht beispielsweise zur Hauptsache, d.h. zu 90% oder mehr aus HDPE oder LDPE. Der Behälterboden 5 bildet bei dem dargestellten Ausführungsbeispiel zugleich eine Standfläche für den Kunststoffbehälter 1. Der Behälterkörper 2 kann, wie dargestellt ist, an seinem dem Behälterboden 5 entgegengesetzten Längsende eine im wesentlichen flache Behälterschulter 6 aufweisen, die einen Schulterabschnitt definiert. Anschliessend and die Behälterschulter 6 erstreckt sich ein Halsabschnitt in Richtung einer Ausgiessöffnung 3 der als Ausgiessstutzen 7 ausgebildet ist. Dieser Ausgiesstutzen 7 berandet eine Ausgiessöffnung 3 . Diese Konfiguratin entsprichet der typischen Konfiguration einer Flasche. In alternativen Ausführungsvarianten des Kunststoffbehälters können die Behälterwandungen auch direkt in den Ausgiessstutzen 7 mit der Ausgiessöffnung 3 münden. An der Aussenwandung des Ausgiessstutzens können erste Eingriffselemente 9 in Form von Gewindeabschnitten, Gewindegängen oder dergleichen angeordnet sein, die formschlüssig mit korrespondierenden zweiten Eingriffselementen an der Innenwandung eines Verschlusses (nicht dargestellt) zusammenwirken. Alternativ können die ersten Eingriffsmittel auch an der Innenwandung des Ausgiessstutzens angeordnet sein. In diesem Fall weist der zugehörige Verschluss korrespondierende zweite Eingriffsmittel an einer Aussenwandung des Verschlusses auf. Die Aussen- bzw. Innenwandung des Ausgiessstutzens können beispielsweise auch unstrukturiert bzw. glatt und zur reibschlüssigen Festlegung eines Verschlussstopfens ausgebildet sein.

Wie aus der Abbildung in Fig. 1 ersichtlich ist, ist innerhalb des von den Behälterwandungen 4 und dem Behälterboden 5 umschlossenen Hohlraums 8 eine Stützstruktur 10 angeordnet. Die Stützstruktur 10 erstreckt sich im wesentlichen über die gesamte Höhe des Behälterkörpers 2 und verleiht diesem die notwendige mechanische Steifigkeit und Festigkeit. Die Behälterwandungen 4 selbst müssen keine mechanischen Kräfte aufnehmen. Durch die Stützstruktur 10 können die Barrierefunktion des Behälterkörpers 2 und die Stützfunktion voneinander entkoppelt werden. Die Barrierefunktion wird von den den Hohlraum 8 umschliessenden Behälterwandungen 4 und vom Behälterboden 5 wahrgenommen. Diese können hinsichtlich dieser Funktion optimiert werden. Die Stützfunktion hingegen wird von der Stützstruktur 10 übernommen. Dies erlaubt es, die Behälterwandungen und/oder den Behälterboden in ihren Wandstärken zu verringern. So kann die Wandstärke der Behälterwandungen 4 bzw. des Behälterbodens beispielsweise nur noch von 0,1 mm bis 0,5 mm, vorzugsweise von 0,15 mm bis 0,3 mm betragen.

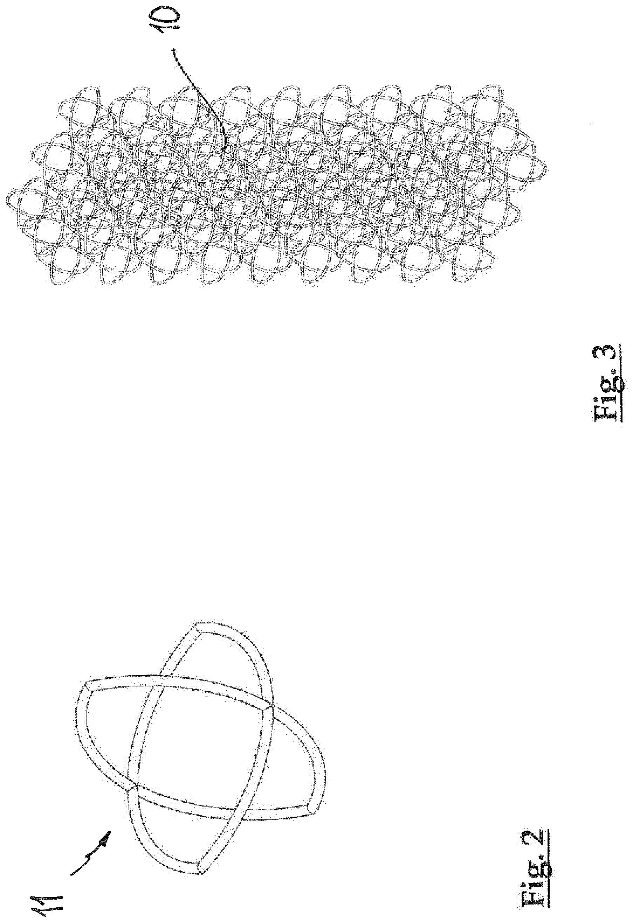

Die Stützstruktur 10 ist aus einer Anzahl von Grundstrukturelementen 11 aufgebaut. Ein Beispiel eines derartigen Grundstrukturelements 11 ist in Fig. 2 dargestellt. Das Grundstrukturelement 11 ist räumlich ausgebildet und weist etwa die Form von zwei gleichartigen, miteinander verbundenen Ellipsen auf, deren Längsachsen etwa senkrecht zueinander ausgerichtet sind. Das Grundstrukturelement 11 ist beispielsweise in einem 3D-Druckverfahren hergestellt. Das Grundstrukturelement 11 besitzt einen Durchmesser, der 0,05 mm nicht unterschreitet.

Mehrere Grundstrukturelemente 11 sind miteinander verbunden und bilden so die Stützstruktur 10, die in Fig. 3 dargestellt ist. Die Grundstrukturelemente 11 sind dabei im wesentlichen gleichartig ausgebildet und miteinander verbunden. Bei der Herstellung der Stützstruktur in einem 3D-Druckverfahren bestehen hinsichtlich der Ausgestaltung und Formgebung der Grundstrukturelemente kaum Einschränkungen. Die Grundstrukturelemente können dann beispielsweise durch Schweissen, z.B. Laserschweissen, miteinander verbunden sein.

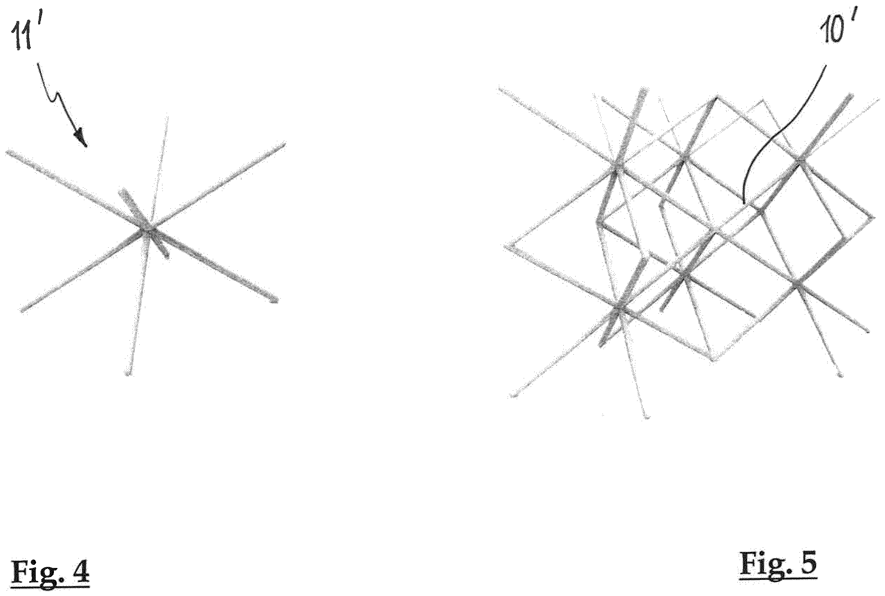

Fig. 4 zeigt eine alternative Ausführungsvariante eines räumlich ausgebildeten Grundstrukturelements, das mit dem Bezugszeichen 11 ' versehen ist. Das Grundstrukturelement 11 ` weist die Form von vier räumlich im gleichen Winkel zueinander geneigten Stäben auf. Die einzelnen Stäbe weisen einen Durchmesser auf, der wenigstens 0,05 mm beträgt. Die Herstellung der Grundstrukturelemente 11' erfolgt wiederum beispielsweise in einen 3D-Druckverfahren.

Die Grundstrukturelemente 11, 11' bestehen aus Kunststoff und/oder aus Metall und/oder aus Keramik und/oder aus Carbon-bzw. Graphit und dergleichen Materialien oder Materialgemischen oder aus Papier oder sonstigen pflanzenfaserbasierten Werkstoffen. Einschränkungen bezüglich der Materialien für die Grundstrukturelemente 11, 11' bestehen nur dort, wo die Stützstruktur direkt mit dem fliess- und rieselfähigen Füllgut in Berührung kommt. In diesen Fällen muss das Material der Stützstruktur beispielsweise für Lebensmittel geeignet und zugelassen und/oder bezüglich des Füllguts inert sein.

Die Grundstrukturelemente 11' können zu einer grösseren Stützstruktur 10' zusammengefügt werden, die beispielsweise in Fig. 5 dargestellt ist. Die in Fig. 3 und Fig. 5 dargestellten Stützstrukturen 10, 10' weisen einen fachwerkartigen Aufbau auf. Dadurch kann das durch die im Hohlraum angeordnete Stützstruktur 10, 10' verlorene Volumen klein gehalten werden. Fachwerkartig aufgebaute Stützstrukturen 10, 10' weisen zudem eine hohe Eigensteifigkeit und eine hohe Stauchfestigkeit auf.

Die dreidimensional aufgebaute Stützstruktur 10, 10' kann in wenigstens einer Dimension elastisch deformierbar ausgebildet sein. Die Elastizität der Stützstruktur 10, 10' in wenigstens eine Dimension kann beispielsweise ein Ausbringen des fliess- oder rieselfähigen Füllguts durch Zusammenpressen von zwei entlang der angegebenen Dimension einander gegenüberliegenden Behälterwandungen erleichtern.

In einer nicht näher dargestellten Ausführungsvariante der Erfindung kann die Stützstruktur flächig ausgebildet sein. Die Stützstruktur kann dabei derart ausgebildet sein, dass sie in eine ebene Fläche abwickelbar ist. Die Stützstruktur kann auch aus einem flachen Bandmaterial gefertigt sein. Die Formgebung der Stützstruktur kann dabei durch Stanzen, mechanisches Schneiden, Laserschneiden oder dergleichen Bearbeitungsverfahren erfolgen. Bei einer Herstellung der Stützstruktur in einem 3D-Druckverfahren kann diese in planen Schichten hergestellt sein. Die Schichten können dabei parallel zu einer Längsachse des Kunststoffbehälters ausgerichtet sein.

Die flächig ausgebildete Stützstruktur kann an wenigstens einer der Behälterwandungen oder dem Behälterboden angeordnet bzw. in wenigstens eine der Behälterwandungen oder den Behälterboden eingebettet sein. Bei dieser Ausführungsvariante der Erfindung bildet die Stützstruktur eine Art Gerüst für die jeweilige Behälterwandung bzw. für den Behälterboden. Die Behälterwandung bzw. der Behälterboden selbst muss nur noch so dick ausgebildet werden, wie es für die Erfüllung der Barrierefunktion erforderlich ist. Die mechanische Festigkeit der Behälterwandung bzw. des Behälterbodens ist durch die Stützstruktur festgelegt. In den Bereichen, in denen die Stützstruktur und die Behälterwandungen überlappen, beträgt die Wandstärke wenigstens 0,25 mm.

Die flächig ausgebildete Stützstruktur kann als eine Rahmenstruktur ausgebildet sein, die sich wenigstens bereichsweise über eine axiale Längsausdehnung und/oder eine Umfangsausdehnung der Behälterwandung erstreckt. Die Behälterwandung kann beispielsweise derart in diese Rahmenstruktur eingefügt sein, dass die Rahmenstruktur sichtbar bleibt. In einer alternativen Ausführungsvariante kann die Rahmenstruktur von der Behälterwandung verdeckt sein. Die Stützstruktur kann als eine konturgebende Struktur ausgebildet sein und die Kontur der wenigstens einen Behälterwandung festlegen. Die einzelnen Behälterwandungen können dann beispielsweise zu dem Kunststoffbehälter zusammenmontiert werden. In der Regel werden aber die Stützstruktur der einzelnen Behälterwandungen aneinander befestigt, um die Kontur des Behälterkörpers festzulegen. Bei einer Ausführungsvariante des Kunststoffbehälters kann die Stützstruktur zwischen einer Aussenwandung und einer Innenwandung des Behälterkörpers angeordnet sein. Bei dieser Variante ist die Stützstruktur in die Behälterwandungen eingebettet. Derart montiert kommt die Stützstruktur nicht in Kontakt mit dem fliess- oder rieselfähigen Füllgut. Dies erhöht die Freiheitsgrade hinsichtlich der für die Stützstruktur einsetzbaren Materialien.

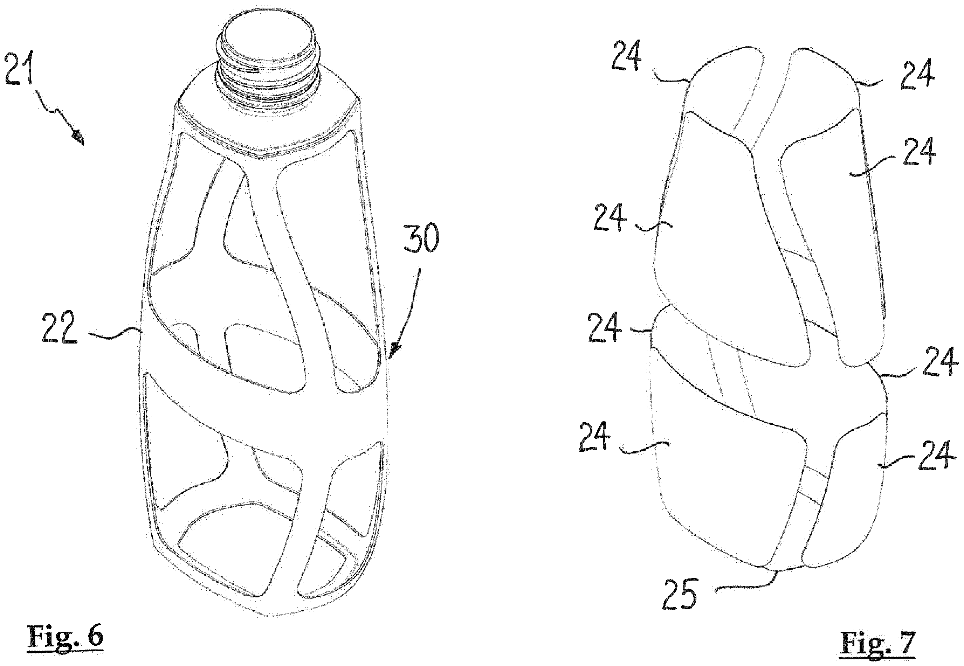

Fig. 6 und Fig. 7 zeigen ein Ausführungsbeispiel eines Kunststoffbehälters 21, der einen Behälterkörper 22 mit einer flächig ausgebildeten Stützstruktur 30 (Fig. 6) aufweist, die bereits die gesamte Kontur des Behälterkörpers 22 festlegt. Die Behälterwandungen 24 und der Behälterboden 25 des Behälterkörpers 22 (Fig. 7) werden dann innen oder aussen an die Stützstruktur 30 angefügt. Die Stützstruktur 30 kann aus einem flachen Bandmaterial gefertigt sein. Die Formgebung der Stützstruktur 30 kann dabei durch Stanzen, mechanisches Schneiden, Laserschneiden oder dergleichen Bearbeitungsverfahren erfolgen. Die Stützstruktur 30 kann auch in einem 3D-Druckverfahren hergestellt sein. Die Behälterwandungen 24 und der Behälterboden 25 können aus einem flachen Bandmaterial gefertigt oder in einem 3D-Druckverfahren hergestellt sein. In jedem Fall sind entweder die Stützstruktur 30 oder die Behälterwandungen 24 oder der Behälterboden 25 oder alle Komponenten des Kunststoffbehälters 21 wenigstens bereichsweise in einem 3D-Druckverfahren hergestellt. Der Behälterkörper 22 besteht dabei beispielsweise zur Hauptsache, d.h. zu 90% oder mehr aus HDPE oder LDPE.

Der erfindungsgemässe Kunststoffbehälter kann einen Behälterkörper mit kreisförmigem oder einem flachovalen oder einem polygonalen Querschnitt aufweisen. Der Kunststoffbehälter kann auch einen Griff aufweisen. Der Griff kann bereits in den Behälterkörper integriert oder auch erst nachträglich am Behälterkörper montiert sein. Die Stützstruktur kann dazu beispielsweise bereits mit Montagepunkten für den Griff ausgestattet sein.

Die Erfindung ist am Beispiel von konkreten Ausführungsbeispielen beschrieben worden. Die vorstehende Beschreibung dient nur zur Erläuterung der Erfindung und ist nicht als einschränkend zu betrachten. Vielmehr wird die Erfindung durch die Patentansprüche

## Patentansprüche

1. Kunststoffbehälter (1, 21) für fliess- und rieselfähiges Füllgut umfassend einen vorzugsweise mit einer oder mehreren Entleeröffnungen umfassend einen Schulterbereich (6), einen Halsbereich und eine Ausgiessöffnung versehenen Behälterkörper, (2, 22) der Behälterwandungen (4, 24) und einen Behälterboden (5, 25) aufweist, die einen Hohlraum (8) umschliessen , **dadurch gekennzeichnet, dass** der Behälterkörper (2, 22) wenigstens eine Stützstruktur (10, 10', 30) aufweist, wobei die Entleeröffnung umfassend den Schulterbereich (6), den Halsbereich und die Ausgiessöffnung (3) gemeinsam mit dem Behälterkörper (2, 22) und/oder die Stützstruktur (10, 10', 30) in einem 3D-Druckverfahren hergestellt ist.

2. Kunststoffbehälter (1, 21) nach Anspruch 1, **dadurch gekennzeichnet, dass** die Stützstruktur (10, 10', 30) an wenigstens einer Aussenwandung des Behälterkörpers (2, 22) und/oder an wenigstens einer Innenwandung des Behälterkörpers (2, 22) und/oder am Behälterboden (5, 25) und/oder innerhalb des von den Behälterwandungen (4, 24) umschlossenen Hohlraums (8) angeordnet und/oder in wenigstens eine der Behälterwandungen (4, 24) eingebettet und/oder in den Behälterboden (5, 25) eingebettet ist.

3. Kunststoffbehälter (1, 21) nach Anspruch 1 oder 2, **dadurch gekennzeichnet, dass** die Stützstruktur (10, 10', 30) aus Kunststoff und/oder aus Metall und/oder aus Keramik und/oder aus Carbon-bzw. Graphitstrukturen und dergleichen Materialien oder Materialgemischen oder aus Papier oder sonstigen pflanzenfaserbasierten Werkstoffen besteht.

4. Kunststoffbehälter (1, 21) nach einem der vorangehenden Ansprüche, **dadurch gekennzeichnet, dass** die Stützstruktur (10, 10', 30) innerhalb des von den Behälterwandungen (4, 24) umschlossenen Hohlraums (8) angeordnet ist und sich im Wesentlichen über eine gesamte axiale Länge des Behälterkörpers (2, 22) erstreckt.

5. Kunststoffbehälter (1, 21) nach Anspruch 1, **dadurch gekennzeichnet, dass** die Stützstruktur (10, 10', 30) aus einem oder mehreren Grundstrukturelementen (11, 11') zusammengesetzt ist, die im Wesentlichen gleichartig ausgebildet und miteinander verbunden sind.

6. Kunststoffbehälter (1, 21) nach Anspruch 5, **dadurch gekennzeichnet, dass** die Stützstruktur (10, 10', 30) aus einem oder mehreren Grundstrukturelementen (11, 11') zusammengesetzt ist, die unterschiedlich ausgebildet und miteinander verbunden sind.

7. Kunststoffbehälter (1, 21) nach Anspruch 4, 5 oder 6, **dadurch gekennzeichnet, dass** die Grundstrukturelemente (11, 11') einen Durchmesser von wenigstens 0,05 mm bis 1 mm aufweisen.

8. Kunststoffbehälter (1, 21) nach Anspruch 4 bis 7, **dadurch gekennzeichnet, dass** die Stützstruktur (10, 10', 30) sich über einen Grossteil des von den Begrenzungswandungen umschlossenen Hohlraums (8) erstreckt.

9. Kunststoffbehälter (1, 21) nach einem der Ansprüche 5 bis 8, **dadurch gekennzeichnet, dass** die Stützstruktur (10, 10', 30) einen fachwerkartigen Aufbau aufweist.

10. Kunststoffbehälter (1, 21) nach Anspruch 9, **dadurch gekennzeichnet, dass** die Stützstruktur (10, 10', 30) dreidimensional aufgebaut ist und in wenigstens eine Dimension elastisch deformierbar ausgebildet ist.

11. Kunststoffbehälter (1, 21) nach Anspruch 9 oder 10, **dadurch gekennzeichnet, dass** die Dimension einer Tiefe des Behälterkörpers (2, 22) entspricht.

12. Kunststoffbehälter (1, 21) nach einem der Ansprüche 1 bis 4, **dadurch gekennzeichnet, dass** die Stützstruktur (10, 10', 30) an wenigstens einer der Behälterwandungen (4, 24) angeordnet bzw. in wenigstens eine der Behälterwandungen (4, 24) eingebettet ist.

13. Kunststoffbehälter (1, 21) nach Anspruch 12, **dadurch gekennzeichnet, dass** die Stützstruktur (10, 10', 30) als eine Rahmenstruktur ausgebildet ist, die sich wenigstens bereichsweise über eine axiale Längsausdehnung und/oder eine Umfangsausdehnung der Behälterwandung (4, 24) erstreckt.

14. Kunststoffbehälter (1, 21) nach Anspruch 12 oder 13, **dadurch gekennzeichnet, dass** die Stützstruktur (10, 10', 30) als eine konturgebende Struktur ausgebildet ist und die Kontur der wenigstens einen Behälterwandung (4, 24) festlegt.

15. Kunststoffbehälter (1, 21) nach Anspruch 14, **dadurch gekennzeichnet, dass** die Stützstruktur (10, 10', 30) zwischen einer Aussenwandung und einer Innenwandung des Behälterkörpers angeordnet ist.

16. Kunststoffbehälter (1, 21) nach einem der Ansprüche 12 bis 15, **dadurch gekennzeichnet, dass** die Stützstruktur (10, 10', 30) als konturgebende Struktur für den Behälterkörper (2, 22) ausgebildet ist.

17. Kunststoffbehälter (1, 21) nach einem der Ansprüche 12 bis 16, **dadurch gekennzeichnet, dass** die Stützstruktur (10, 10', 30) in eine ebene Fläche abwickelbar ist.

18. Kunststoffbehälter (1, 21) nach einem der Ansprüche 12 bis 17, **dadurch gekennzeichnet, dass** die Stützstruktur (10, 10', 30) aus einem flachen Bandmaterial gefertigt ist.

19. Kunststoffbehälter (1, 21) nach Anspruch 18, **dadurch gekennzeichnet, dass** die Stützstruktur (10, 10', 30) ausgestanzt, geschnitten, lasergeschnitten und nach dergleichen Verfahren in der erforderlichen Form hergestellt ist.

20. Kunststoffbehälter (1, 21) nach Anspruch 18, **dadurch gekennzeichnet, dass** die Stützstruktur (10, 10', 30) in planen Schichten in einem 3D Druckverfahren hergestellt ist, wobei die Schichten parallel zu einer Längsachse des Kunststoffbehälters (1, 21) ausgerichtet sind.

21. Kunststoffbehälter (1, 21) nach einem der vorangehenden Ansprüche, **dadurch gekennzeichnet, dass** die Stützstruktur (10, 10', 30) am Behälterboden (5, 25) angeordnet und/oder in den Behälterboden (5, 25) eingebettet ist.

22. Kunststoffbehälter (1, 21) nach einem der vorangehenden Ansprüche 12 bis 21, **dadurch gekennzeichnet, dass** die Stützstruktur (10, 10', 30) einen fachwerkartigen Aufbau aufweist.

23. Kunststoffbehälter (1, 21) nach einem der vorangehenden Ansprüche, **dadurch gekennzeichnet, dass** der Behälterkörper (2, 22) wenigstens bereichsweise in einem Blasverfahren hergestellt ist.

24. Kunststoffbehälter (1, 21) nach einem der vorangehenden Ansprüche, **dadurch gekennzeichnet, dass** eine mit einer Stützstruktur (10, 10', 30) versehenen Behälterwandung (4, 24) eine Wandstärke von 0,05 mm bis 1 mm, vorzugsweise von 0,15 mm bis 0,30 mm, aufweist, wobei die Wandstärke ohne die Stützstruktur gemessen ist.

25. Kunststoffbehälter (1, 21) nach einem der Ansprüche 12 bis 24, **dadurch gekennzeichnet, dass** eine kombinierte Wandstärke in Bereichen, in denen sich Stützstruktur (10, 10', 30) und Behälterwandung (4, 24) überlappen wenigstens 0,1 mm beträgt.

26. Kunststoffbehälter (1, 21) nach einem der vorangehenden Ansprüche, **dadurch gekennzeichnet, dass** der Behälterkörper (2, 22) zu mehr als 50% einen thermoplastischen Kunststoff, insbesondere PET, PP, HDPE oder LDPE oder sonstige biobasierte thermoplastische Kunststoffe, wie zum Beispiel PEF, umfasst.

27. Kunststoffbehälter (1, 21) nach einem der vorangehenden Ansprüche, **dadurch gekennzeichnet, dass** der Behälterkörper (2, 22) einen kreisförmigen oder einen flachovalen oder einen polygonalen Querschnitt aufweist.

28. Kunststoffbehälter (1, 21) nach einem der vorangehenden Ansprüche, **dadurch gekennzeichnet, dass** der Behälterkörper (2, 22) einen integrierten Griff aufweist.

## Claims

1. Plastic container (1, 21) (1, 21) for flowable and pourable filling material, comprising a container body (2, 22) which is preferably provided with one or more emptying openings comprising a shoulder region (6), a neck region and a pour-out opening, and which comprises container walls (4, 24) and a container base (5, 25) which encompass a cavity (8), **characterised in that** the container body (2, 22) comprises at least one support structure (10, 10', 30), wherein the emptying opening comprising the shoulder region (6), the neck region and the pour-out opening (3) are manufactured together with the container body (2, 22) and/or the support structure (10, 10', 30) in a 3D printing method.

2. Plastic container (1, 21) according to claim 1, **characterised in that** support structure (10, 10', 30) is arranged on at least an outer wall of the container body (2, 22) and/or on at least an inner wall of the container body (2, 22) and/or on the container base (5, 25) and/or within the cavity (8) which is encompassed by the container walls (4, 24) and/or is embedded into at least one of the container walls (4, 24) and/or into the container base (5, 25) .

3. Plastic container (1, 21) according to claim 1 or 2, **characterised in that** the support structure (10, 10', 30) consists of plastic and/or metal and/or ceramic and/or carbon structures or graphite structures and similar materials or material mixtures or of paper or other plant-fibre-based materials.

4. Plastic container (1, 21) according to one of the preceding claims, **characterised in that** the support structure (10, 10', 30) is arranged within the cavity (8) which is encompassed by the container walls (4, 24) and extends over essentially an entire axial length of the container body (2, 22).

5. Plastic container (1, 21) according to claim 1, **characterised in that** the support structure (10, 10', 30) is composed of one or more basic structure elements (11, 11') which are designed essentially in the same manner and are connected to one another.

6. Plastic container (1, 21) according to claim 5, **characterised in that** the support structure (10, 10', 30) is composed of one or more basic structure elements (11, 11') which are designed differently and are connected to one another.

7. Plastic container (1, 21) according to claim 4, 5 or 6, **characterised in that** the basic structure elements (11, 11') have a diameter of at least 0.05 mm to 1 mm.

8. Plastic container (1, 21) according to claim 4 to 7, **characterised in that** the support structure (10, 10', 30) extends over a large part of the cavity (8) which is encompassed by the delimitation walls.

9. Plastic container (1, 21) according to one of the claims 5 to 8, **characterised in that** the support structure (10, 10', 30) has a framework-like construction.

10. Plastic container (1, 21) according to claim 9, **characterised in that** the support structure (10, 10', 30) is constructed in a three-dimensional manner and is designed in an elastically deformable manner in at least one dimension.

11. Plastic container (1, 21) according to claim 9 or 10, **characterised in that** the dimension corresponds to a depth of the container body (2, 22).

12. Plastic container (1, 21) according to one of the claims 1 to 4, **characterised in that** the support structure (10, 10', 30) is arranged on at least one of the container walls (4, 24) or is embedded into at least one of the container walls (4, 24).

13. Plastic container (1, 21) according to claim 12, **characterised in that** the support structure (10, 10', 30) is designed as a frame structure which at least in regions extends over an axial longitudinal extension and/or a peripheral extension of the container wall (4, 24).

14. Plastic container (1, 21) according to claim 12 or 13, **characterised in that** the support structure (10, 10', 30) is designed as a contour-providing structure and the contour defines the at least one container wall (4, 24).

15. Plastic container (1, 21) according to claim 14, **characterised in that** the support structure (10, 10', 30) is arranged between an outer wall and an inner wall of the container body.

16. Plastic container (1, 21) according to one of the claims 12 to 15, **characterised in that** the support structure (10, 10', 30) is designed as a contour-providing structure of the container body (2, 22).

17. Plastic container (1, 21) according to one of the claims 12 to 16, **characterised in that** the support structure (10, 10', 30) can be unravelled into a plane surface.

18. Plastic container (1, 21) according to one of the claims 12 to 17, **characterised in that** the support structure (10, 10', 30) is manufactured of a flat tape material.

19. Plastic container (1, 21) according to claim 18, **characterised in that** the support structure (10, 10', 30) is punched out, cut, laser cut or is manufactured in the desired shape according to similar methods.

20. Plastic container (1, 21) according to claim 18, **characterised in that** the support structure (10, 10', 30) is manufactured in plane layers in a 3D printing method, wherein the layers are aligned parallel to a longitudinal axis of the plastic container (1, 21).

21. Plastic container (1, 21) according to one of the preceding claims, **characterised in that** the support structure (10, 10', 30) is arranged on the container base (5, 25) and/or is embedded into the container base (5, 25).

22. Plastic container (1, 21) according to one of the preceding claims 12 to 21, **characterised in that** the support structure (10, 10', 30) comprises a framework-like construction.

23. Plastic container (1, 21) according to one of the preceding claims, **characterised in that** the container body (2, 22) at least in regions is manufactured in a blow moulding method.

24. Plastic container (1, 21) according to one of the preceding claims, **characterised in that** a container wall (4, 24) which is provided with a support structure (10, 10', 30) has a wall thickness of 0.05 mm to 1 mm, preferably of 0.15 mm to 0.30 mm, wherein the wall thickness is measured without the support structure.

25. Plastic container (1, 21) according to one of the claims 12 to 24, **characterised in that** a combined wall thickness in regions, in which the support structure (10, 10', 30) and the container wall (4, 24) overlap, is at least 0.1 mm.

26. Plastic container (1, 21) according to one of the preceding claims, **characterised in that** the container body (2, 22) to more than 50% comprises thermoplastic plastics, in particular PET, PP, HDPE or LDPE or other bio-based thermoplastic plastics, such as for example PEF.

27. Plastic container (1, 21) according to one of the preceding claims, **characterised in that** the container body (2, 22) has a circular or a flat-oval or a polygonal cross section.

28. Plastic container (1, 21) according to one of the preceding claims, **characterised in that** the container body (2, 22) comprises an integrated handle.

## Revendications

1. Récipient en matière plastique (1, 21) destiné à un produit de remplissage fluide et susceptible de s'écouler, comprenant un corps de récipient (2, 22) doté de préférence d'une ou plusieurs ouvertures de vidange comportant une zone d'épaule (6), une zone de col et une ouverture de versement, corps qui présente des parois de récipient (4, 24) et un fond de récipient (5, 25) qui entourent une cavité (8), **caractérisé en ce que** le corps de récipient (2, 22) présente au moins une structure de support (10, 10', 30), sachant que l'ouverture de vidange comportant la zone d'épaule (6), la zone de col et l'ouverture de versement (3) est fabriquée conjointement avec le corps de récipient (2, 22) et/ou la structure de support (10, 10', 30) est fabriquée par un procédé d'impression 3D.

2. Récipient en plastique (1, 21) selon la revendication 1, **caractérisé en ce que** la structure de support (10, 10', 30) est disposée sur au moins une paroi extérieure du corps de récipient (2, 22) et/ou sur au moins une paroi intérieure du corps de récipient (2, 22) et/ou sur le fond de récipient (5, 25) et/ou à l'intérieur de la cavité (8) entourée par les parois de récipient (4, 24) et/ou est incorporée dans au moins une des parois de récipient (4, 24) et/ou est incorporée dans le fond de récipient (5, 25).

3. Récipient en plastique (1, 21) selon la revendication 1 ou 2, **caractérisé en ce que** la structure de support (10, 10', 30) est constituée de matière plastique et/ou de métal et/ou de céramique et/ou de structures en carbone ou graphite et de matériaux similaires ou de mélanges de matériaux ou de papier ou d'autres matériaux à base de fibres végétales.

4. Récipient en plastique (1, 21) selon l'une des revendications précédentes, **caractérisé en ce que** la structure de support (10, 10', 30) est disposée à l'intérieur de la cavité (8) entourée par les parois de récipient (4, 24) et s'étend sensiblement sur une longueur axiale totale du corps de récipient (2, 22).

5. Récipient en plastique (1, 21) selon la revendication 1, **caractérisé en ce que** la structure de support (10, 10', 30) est composée d'un ou plusieurs éléments de structure de base (11, 11') qui sont réalisés sensiblement de façon identique et sont reliés les uns aux autres.

6. Récipient en plastique (1, 21) selon la revendication 5, **caractérisé en ce que** la structure de support (10, 10', 30) est composée d'un ou plusieurs éléments de structure de base (11, 11') qui sont réalisés de façon différente et sont reliés les uns aux autres.

7. Récipient en plastique (1, 21) selon la revendication 4, 5 ou 6, **caractérisé en ce que** les éléments de structure de base (11, 11') présentent un diamètre allant d'au moins 0,05 mm à 1 mm.

8. Récipient en plastique (1, 21) selon la revendication 4 à 7, **caractérisé en ce que** la structure de support (10, 10', 30) s'étend sur une grande partie de la cavité (8) entourée par les parois de délimitation.

9. Récipient en plastique (1, 21) selon l'une des revendications 5 à 8, **caractérisé en ce que** la structure de support (10, 10', 30) présente une construction de type treillis.

10. Récipient en plastique (1, 21) selon la revendication 9, **caractérisé en ce que** la structure de support (10, 10', 30) est conçue de façon tridimensionnelle et est réalisée de manière à pouvoir être déformée élastiquement dans au moins une dimension.

11. Récipient en plastique (1, 21) selon la revendication 9 ou 10, **caractérisé en ce que** la dimension correspond à une profondeur du corps de récipient (2, 22).

12. Récipient en plastique (1, 21) selon l'une des revendications 1 à 4, **caractérisé en ce que** la structure de support (10, 10', 30) est disposée sur au moins une des parois de récipient (4, 24) ou est incorporée dans au moins une des parois de récipient (4, 24)

13. Récipient en plastique (1, 21) selon la revendication 12, **caractérisé en ce que** la structure de support (10, 10', 30) est réalisée sous forme de structure de cadre qui s'étend au moins par portions sur une longueur axiale et/ou une extension périphérique de la paroi de récipient (4, 24).

14. Récipient en plastique (1, 21) selon la revendication 12 ou 13, **caractérisé en ce que** la structure de support (10, 10', 30) est réalisée comme structure définissant un contour et définit le contour de la paroi de récipient (4, 24), au nombre d'au moins une.

15. Récipient en plastique (1, 21) selon la revendication 14, **caractérisé en ce que** la structure de support (10, 10', 30) est disposée entre une paroi extérieure et une paroi intérieure du corps de récipient.

16. Récipient en plastique (1, 21) selon l'une des revendications 12 à 15, **caractérisé en ce que** la structure de support (10, 10', 30) est réalisée comme structure définissant un contour pour le corps de récipient (2, 22).

17. Récipient en plastique (1, 21) selon l'une des revendications 12 à 16, **caractérisé en ce que** la structure de support (10, 10', 30) peut être déroulée en une surface plane.

18. Récipient en plastique (1, 21) selon l'une des revendications 12 à 17, **caractérisé en ce que** la structure de support (10, 10', 30) est fabriquée à partir d'un matériau en bande plat.

19. Récipient en plastique (1, 21) selon la revendication 18, **caractérisé en ce que** la structure de support (10, 10', 30) est poinçonnée, découpée, découpée au laser et fabriquée selon des procédés similaires pour recevoir la forme requise.

20. Récipient en plastique (1, 21) selon la revendication 18, **caractérisé en ce que** la structure de support (10, 10', 30) est fabriquée par couches planes selon un procédé d'impression 3D, les couches étant orientées parallèlement à un axe longitudinal du récipient en plastique (1, 21).

21. Récipient en plastique (1, 21) selon l'une des revendications précédentes, **caractérisé en ce que** la structure de support (10, 10', 30) est disposée sur le fond de récipient (5, 25) et/ou est incorporée dans le fond de récipient (5, 25).

22. Récipient en plastique (1, 21) selon l'une des revendications précédentes 12 à 21, **caractérisé en ce que** la structure de support (10, 10', 30) présente une construction de type treillis.

23. Récipient en plastique (1, 21) selon l'une des revendications précédentes, **caractérisé en ce que** le corps de récipient (2, 22) est fabriqué au moins par portions selon un procédé de soufflage.

24. Récipient en plastique (1, 21) selon l'une des revendications précédentes, **caractérisé en ce qu'**une paroi de récipient (4, 24) dotée d'une structure de support (10, 10', 30) présente une épaisseur de paroi allant de 0,05 mm à 1 mm, de préférence de 0,15 mm à 0,30 mm, l'épaisseur de paroi étant mesurée sans la structure de support.

25. Récipient en plastique (1, 21) selon l'une des revendications 12 à 24, **caractérisé en ce que** dans des zones où la structure de support (10, 10', 30) et la paroi de récipient (4, 24) se chevauchent, une épaisseur de paroi combinée est au moins de 0,1 mm.

26. Récipient en plastique (1, 21) selon l'une des revendications précédentes, **caractérisé en ce que** le corps de récipient (2, 22) comprend à plus de 50 % une matière thermoplastique, notamment PET, PP, PE-HD ou PE-BD ou d'autres matières thermoplastiques biosourcées, telles que PEF.

27. Récipient en plastique (1, 21) selon l'une des revendications précédentes, **caractérisé en ce que** le corps de récipient (2, 22) présente une section circulaire ou ovale plate ou polygonale.

28. Récipient en plastique (1, 21) selon l'une des revendications précédentes, **caractérisé en ce que** le corps de récipient (2, 22) présente une poignée intégrée.
